# EUROPEAN PATENT SPECIFICATION

(11) **EP 4 162 159 B1**
(45) Date of publication and mention of the grant of the patent: **11.03.2026**
(21) Application number: 21818269.9
(22) Date of filing: 05.06.2021
(51) Int. Cl.: F03D 3/04, F03D 9/34, F03D 3/00, F03D 9/45

(54) **WIND DIRECTION SYSTEM**
WINDRICHTUNGSSYSTEM
SYSTÈME D'ORIENTATION DU VENT

(30) Priority: 05.06.2020 US 202063035366 P
(43) Date of publication of application: 12.04.2023
(73) Proprietor: Accelerate Wind LLC, St. Louis, Missouri 63110 (US)
(72) Inventor: BOEING, Erika, St. Louis, Missouri 63110 (US)
(74) Representative: Lincoln IP
(86) International application number: PCT/US2021/036056
(87) International publication number: WO 2021/248103

(56) References cited:
- EP-A1- 2 060 784
- DE-A1- 102016 112 876
- GB-A- 2 443 635
- GB-A- 2 443 635
- KR-B1- 101 071 240
- KR-B1- 101 071 240
- US-A- 5 225 712
- US-A1- 2010 247 302
- US-A1- 2012 175 879
- US-B2- 7 084 520
- ARGONNE INTERNAL CHANNEL: "Chain Reaction Innovations: Demo Day - Accelerate Wind", 11 November 2019 (2019-11-11), XP055883059, Retrieved from the Internet <URL:https://www.youtube.com/watch?v=Z9N3rvyP-M0>

## Description

### CROSS-REFERENCE TO RELATED APPLICATIONS

This application claims the benefit of prior-filed, co-pending U.S. Provisional Patent Application No. 63/035,366, filed on June 5, 2020.

### BACKGROUND OF THE INVENTION

### 1. Field of the Invention

The present invention relates to wind turbine systems, more specifically a wind concentrator for directing wind as it passes over a building.

### 2. Background

A building naturally acts as a concentrator of all of the wind that hits the surface of the building and needs to travel over the top. Pressure differences and concentration of wind created in this process naturally cause wind to speed up as it travels over the edge of a building. While many rooftop wind turbine companies have tried to exploit this increased wind speed in one way or another to produce power, all solutions have fallen short of their power potential due to massive flow separation as wind travels over the edge of the roof. This flow separation means that only a small portion of this faster wind can be captured close to the rooftop edge, resulting in the majority of faster speed wind on the edge of the roof requiring a large, expensive, and ugly tower to capture. Not only are such towers aesthetically obtrusive, they can block light for solar panels and can be difficult and time-consuming to install.

Documents considered during the patent prosecution are i.a.:
EP 2 060 784 A1,
GB 2 443 635 A,
US 2010/247302 A1,
DE 10 2016 112876 A1 and
KR 101071240 B1.

Accordingly, there is a need in the art for a structure which can direct the wind to a lower-profile wind turbine without loss of wind speed.

### BRIEF DESCRIPTION OF THE DRAWINGS

**Figures 1a** and **1b** are images illustrating how an exemplary embodiment of a wind direction system changes the air flow over a building.
**Figures 2a****,** **2b****,** **2c****,** **2d****,** **2e****,** **2f****,** and **2g** illustrate side views of exemplary embodiments of a wind direction system.
**Figure 3** illustrates a perspective view of an exemplary embodiment of a wind turbine which may be incorporated into an embodiment of the wind direction system.
**Figure 4** illustrates a plan view of an exemplary embodiment of a wind turbine powertrain which may be incorporated into an exemplary embodiment of a wind direction system.

### SUMMARY

The present invention is a wind direction system. The system includes at least one lower airfoil having a leading edge, front surface, middle surface, rear surface, and trailing edge, and at least one wind turbine mounted above the at least one lower airfoil. The lower airfoil is mounted to a building surface. The leading edge and the front surface extend over a building edge formed between a front building surface and an upper building surface. The front surface of the lower airfoil is angled into an airflow relative to the middle surface.

Another embodiment of the wind direction system includes at least one lower airfoil having a leading edge, front surface, middle surface, rear surface, and trailing edge, at least one upper airfoil mounted above the lower airfoil, and at least one wind turbine mounted between the lower airfoil and the upper airfoil. The lower airfoil is mounted to a building surface, while the front surface of the lower airfoil is angled into an airflow relative to the middle surface.

Another embodiment of the wind direction system includes at least one lower airfoil having a leading edge, front surface, middle surface, rear surface, and trailing edge, at least one wind turbine mounted above the lower airfoil, and at least one powertrain assembly operably connected to the wind turbine. The lower airfoil is mounted to a building surface. The front surface of the lower airfoil is angled into an airflow relative to the middle surface, while the rear surface of the lower airfoil extends at a downward angle relative to the middle surface.

The objects and advantages of the invention will appear more fully from the following detailed description of the embodiments of the invention and examples.

### DETAILED DESCRIPTION OF THE INVENTION

In the present description, certain terms have been used for brevity, clearness and understanding. No unnecessary limitations are to be applied therefrom beyond the requirement of the prior art because such terms are used for descriptive purposes only and are intended to be broadly construed. The different systems and methods described herein may be used alone or in combination with other systems and methods.

The present wind direction system 100 uses modern airfoil aerodynamic theory to manipulate the air flow closest to the upper surface of the building and allow wind which is naturally faster at the edge of the building to be easily captured and used to produce power. The use of a well-tuned lower airfoil 110 causes wind to be drawn down as it travels over the edge of the upper surface of the building. This technology allows for this faster speed wind to be captured close to the upper surface of the building, allowing for generation of significantly more energy capture than previous turbines have allowed for.

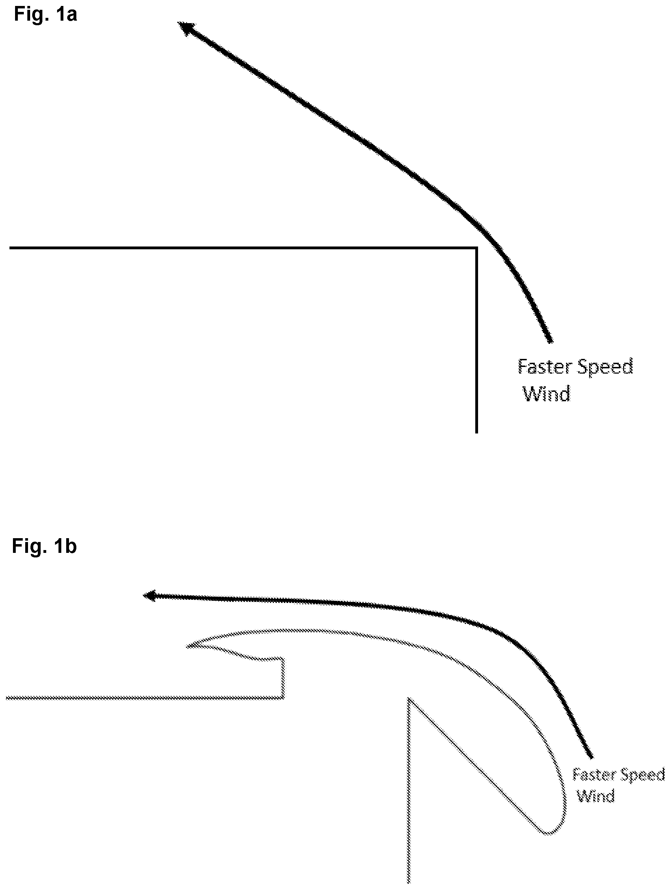

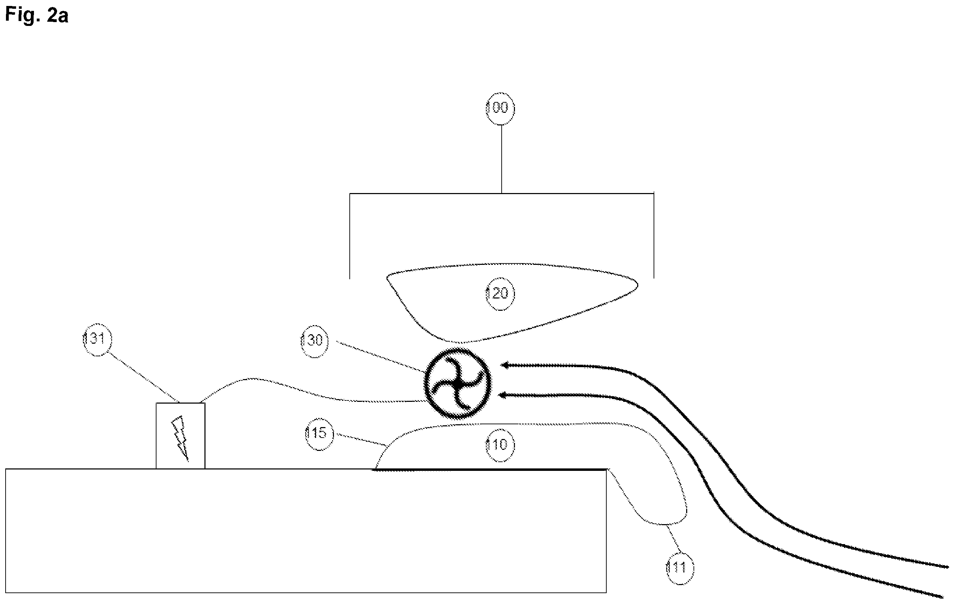

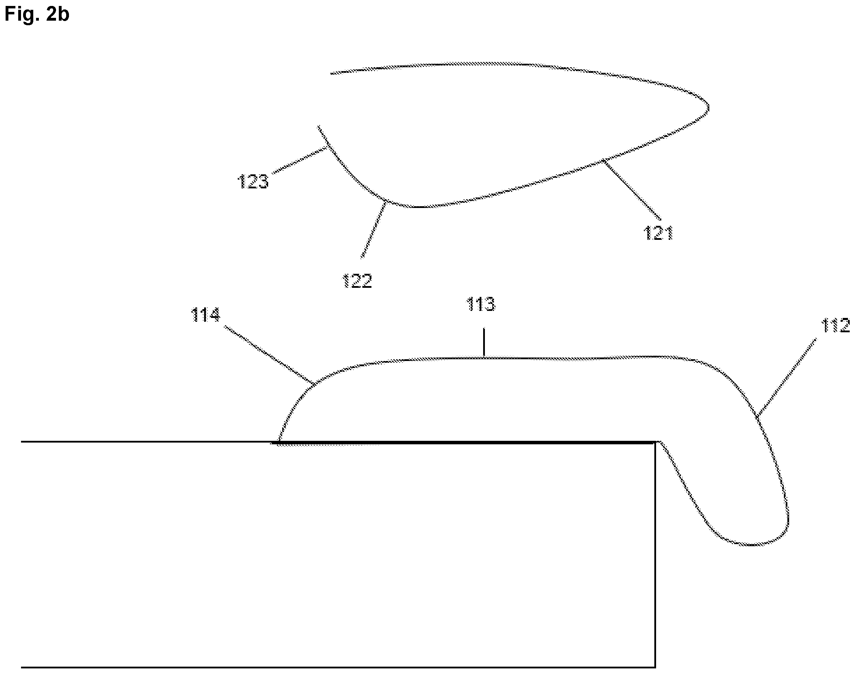

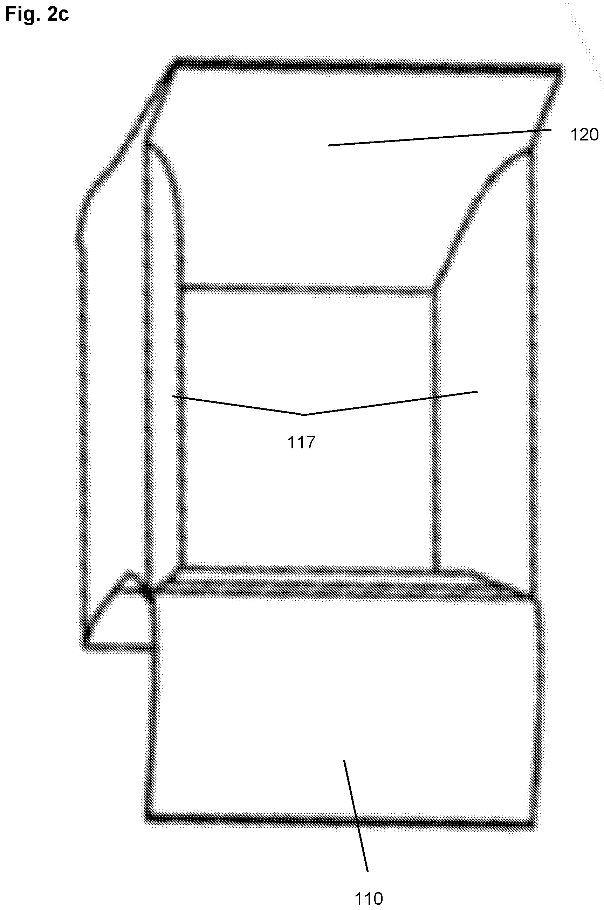

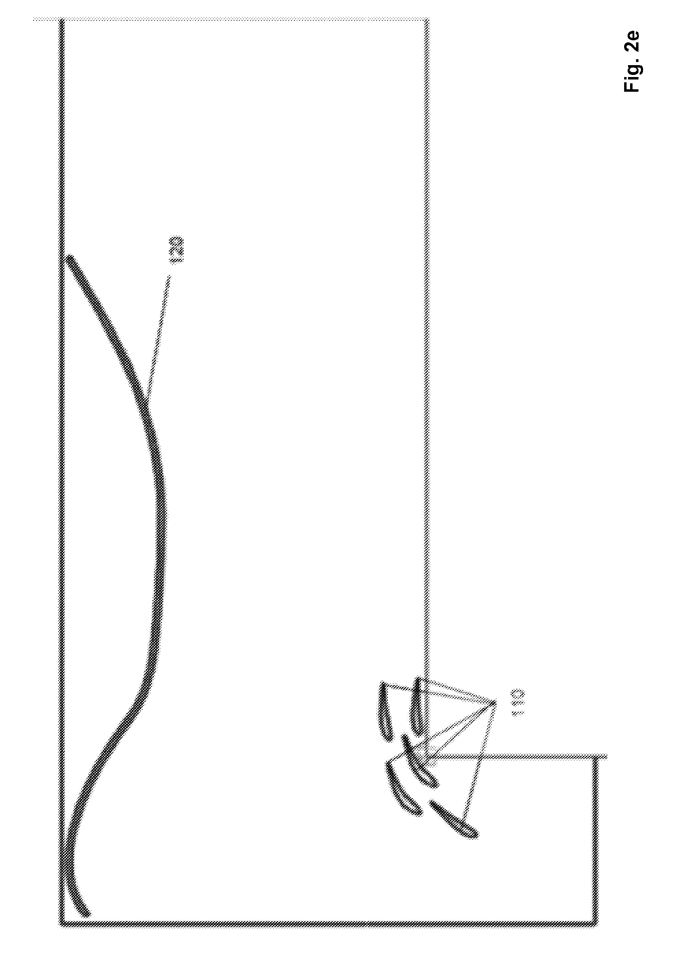

Figures 1a and 1b show images of how the system 100 changes the air flow. When mounted to a building surface, the design of the lower airfoil 110 incorporates features to achieve at least one of two important functions. First, the front of the lower airfoil 110 extending over the edge of the building causes wind to be drawn down as it goes over the edge. The edge of the building is formed between a front building surface and an upper building surface. Second, the slight down-curve at the back of the lower airfoil 110 pulls the air flow down towards the building, further reducing the amount of wake behind the lower airfoil 110 and increasing the amount of air that can be pulled towards a wind turbine 130 mounted above and in some embodiments, behind the lower airfoil 110. A combined lower airfoil 110 and wind turbine 130 is shown in Figure 2a.

As the fastest wind speed is still concentrated towards the front of the lower airfoil 110, it may be difficult for the wind turbine 130 behind the lower airfoil 110 to take full advantage of the faster flow. Additional embodiments combine the lower airfoil 110 (which causes wind to be drawn down towards to the building) with additional elements that redirect, recirculate, and/or concentrate the flow, allowing for the wind to be further sped up and directed so that the wind turbine 130 can easily capture the faster wind speed. These additional elements may include additional lower airfoils 110, at least one detached lower airfoil 140, at least one upper airfoil 120, at least one detached upper airfoil 145, and/or at least one recirculating airfoil 150.

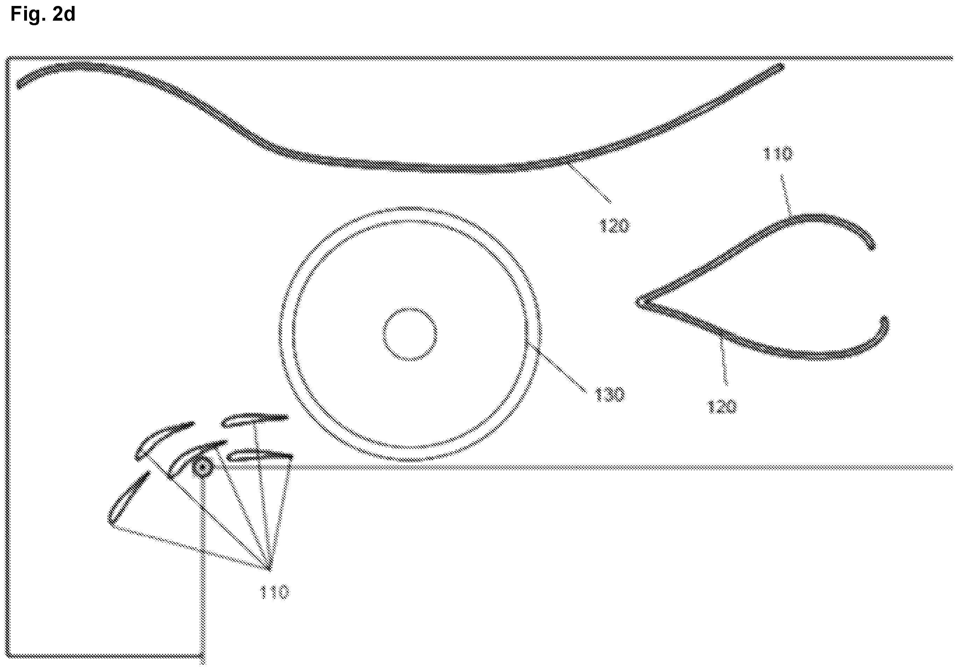

In certain embodiments, as seen in Figures 2d through 2g, the lower airfoil 110 may include multiple lower airfoils 110 to provide increased control over and direction of the airflow. In certain embodiments, each lower airfoil 110 may have a front surface 112, a middle surface 113, and a rear surface 114. In other embodiments, the front surface 112, middle surface 113, and/or rear surface 114 may be split and/or duplicated between at least two different lower airfoils 110. In certain embodiments, the lower airfoil 110 may also be split into a lower airfoil 110 and at least one detached lower airfoil 140. The additional lower airfoil(s) 110 and/or detached lower airfoil(s) 140 may be latitudinally and/or longitudinally displaced from the lower airfoil 110. The detached lower airfoil 140 lengthens the effective surface of the lower airfoil 110 and also allows increased control over and direction of the airflow.

In certain embodiments, as can be seen in Figures 2a through 2g, at least one upper airfoil 120 may be used which forces the air flow that is drawn in by the lower airfoil 110 to stay in a channel where it can be better captured, rather than eventually separating and escaping to the atmosphere. In certain embodiments, the upper airfoil 120 may simply take the form of a flat plate above the lower airfoil 110.

However, other embodiments of this upper airfoil 120 provide an added benefit in that the upper airfoil 120 further concentrates the air flow, increasing the wind speed in the channel. The angled fore surface 121 of the upper airfoil 120 acts as the concentrator, funneling air into the channel formed between the central surface 122 of the upper airfoil 120 and the middle surface 113 of the lower airfoil 110 and increasing the airflow speed. The back surface 123 of the upper airfoil 120 may extend at an upward angle relative to the central surface 122. This may allow the upper airfoil 120 to act as a diffuser, pulling this faster speed wind further through the system 100. The combination of using a concentrator and diffuser at the building edge, combined with the lower airfoil 110, significantly increases the power output compared to existing solutions.

The upper and lower airfoils 120 and 110 have solid curvilinear or planar surfaces over solid or hollow interiors. The upper and lower airfoils 120 and 110 may be formed by casting, 3D printing, or manipulation of stock sheet material.

The upper airfoil 120 can provide additional shaping of the air flow, and can also serve to diffuse the air flow, while the lower airfoil 110 causes the wind to travel along the front and upper surfaces of the building. The lower airfoil 110 may have a lower surface 116 of the lower airfoil 110 flush with the front surface of the building so that the leading edge 111 is in contact with the front surface of the building and the front surface 112 is angled approximately 90 degrees to the middle surface 113. In other embodiments, the lower airfoil 110 may incorporate a closed gap between the leading edge 111 of the lower airfoil 110 and the front surface of the building. The closed gap is created by angling the lower surface 116 of the lower airfoil up to approximately 45 degrees from the front surface of the building. While wind cannot pass through the closed gap, the front surface 112 of the lower airfoil 110 is angled into the wind. The middle surface 113 of the lower airfoil 110 extends back towards a rear surface 114, which terminates in a trailing edge 115. The rear surface 114 may curve or angle downward from the middle surface 113 toward the upper surface of the building to reduce wake and force the air flow to travel more closely to the upper surface of the building.

In certain embodiments, the lower airfoil 110 may also be connected to at least one vertical guide surface 117 extending perpendicularly to the middle surface 113 of the lower airfoil 110. Embodiments which also use at least one upper airfoil 120 may have the at least one vertical guide surface 117 extending between the upper and lower airfoils 120 and 110. The vertical guide surface 117 may be integral with the upper and/or lower airfoils 120 and 110, added on to the upper and/or lower airfoils 120 and 110, or part of a separate structure. Vertical guide surfaces 117 may provide additional concentration and direction of the airflow, as well as structural reinforcement of the system.

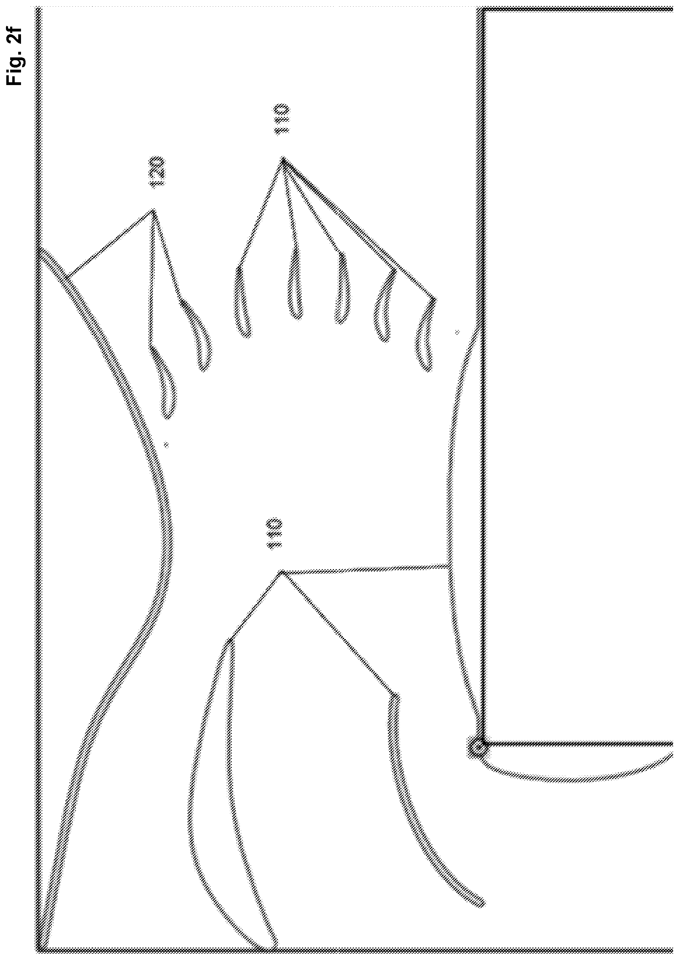

In certain embodiments, as seen in Figures 2d and 2f, the upper airfoil 120 may include multiple upper airfoils 120 to provide increased control over and direction of the airflow. In certain embodiments, each upper airfoil 120 may have a fore surface 121, a central surface 122, and a back surface 123. In other embodiments, the fore surface 121, central surface 122, and/or back surface 123 may be split and/or duplicated between at least two different upper airfoils 120. In certain embodiments, the upper airfoil 120 may also be split into an upper airfoil 120 and at least one detached upper airfoil 145. The additional upper airfoil(s) 120 and/or detached upper airfoil(s) 145 may be latitudinally and/or longitudinally displaced from the upper airfoil 120. The detached upper airfoil 145 lengthens the effective surface of the upper airfoil 120 and also allows increased control over and direction of the airflow.

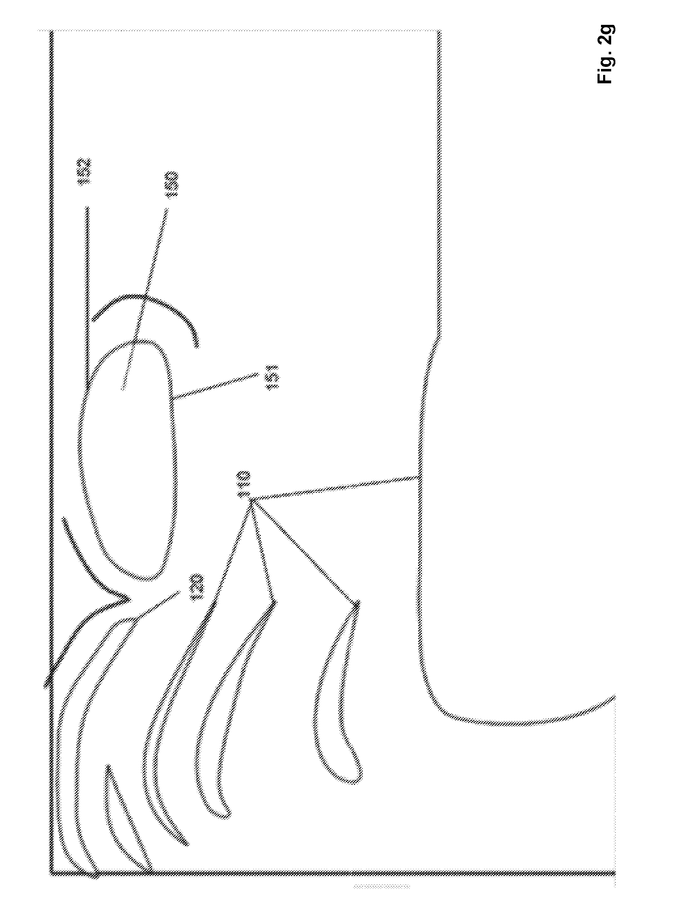

As seen in Figure 2g, inclusion of at least one recirculating airfoil 150 behind and in line with the upper airfoil 120 allows faster airflows to be funneled back through the system 100. The recirculating airfoil 150 features a flatter recirculating lower surface 151 and more rounded recirculating upper surface 152. In other embodiments, such a recirculating airfoil 150 may be located behind and in line with the lower airfoil 110.

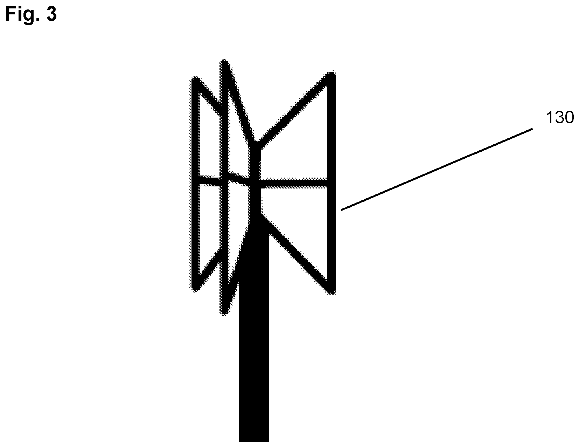

Another benefit of locating the lower airfoil 110 on a building edge is that it allows for a space-efficient design for the wind turbine 130 that is better integrated into the building architecture. A vertical axis (VA) wind turbine 130 shown in Figure 3 may be used. Such wind turbines are known in the art. In the exemplary embodiment shown in Figure 2a, the axis of rotation of the VA wind turbine 130 is rotated 90 degrees to be parallel to the upper building surface and perpendicular to the direction of airflow.

As a result, the rotated vertical axis (RVA) or crossflow wind turbine 130 rotates around a horizontal axis, stretching out in a long cylinder along the building edge above the front surface 112, middle surface 113, or rear surface 114 of the lower airfoil 110. The length of the wind turbine 130 will typically have a length of up to twice the diameter of the wind turbine 130, though increased lengths beyond twice the diameter are contemplated. Multiple wind turbines 130 may be coupled together on the same shaft, utilizing a common gearbox and generator.

Reorientation of the wind turbine is a space-efficient method for increasing the power output of the wind turbine 130 by using a crossflow wind turbine, compared to a typical three-bladed horizontal axis wind turbine. Due to structural constraints, such a horizontal axis wind turbine having a similar height to a crossflow turbine 130 would be size-limited to a unit that produces less than half the power, by way of non-limiting example. At this higher power level, overall system costs go down due to economies of scale on the mechanical components and power electronics. Additionally, there are structural benefits when operating the crossflow wind turbine 130 at the edge of the building. The crossflow wind turbine 130 may be supported with a bearing on both sides, reducing commonly known structural problems with VA wind turbines which can be only supported on one side in their vertical configuration.

In other embodiments, the wind turbine 130 is used in its standard VA wind turbine configuration where the axis of rotation of the VA wind turbine 130 is perpendicular to the upper building surface. This configuration allows the system 100 to incorporate and/or accommodate conventionally-installed VA wind turbines 130.

In other embodiments, the wind turbine 130 is a horizontal-axis wind turbine commonly known in the art, where the axis of rotation of the wind turbine 130 extends parallel to the upper building surface and parallel to the direction of airflow. This configuration also allows the system 100 to incorporate and/or accommodate more conventional wind turbines 130.

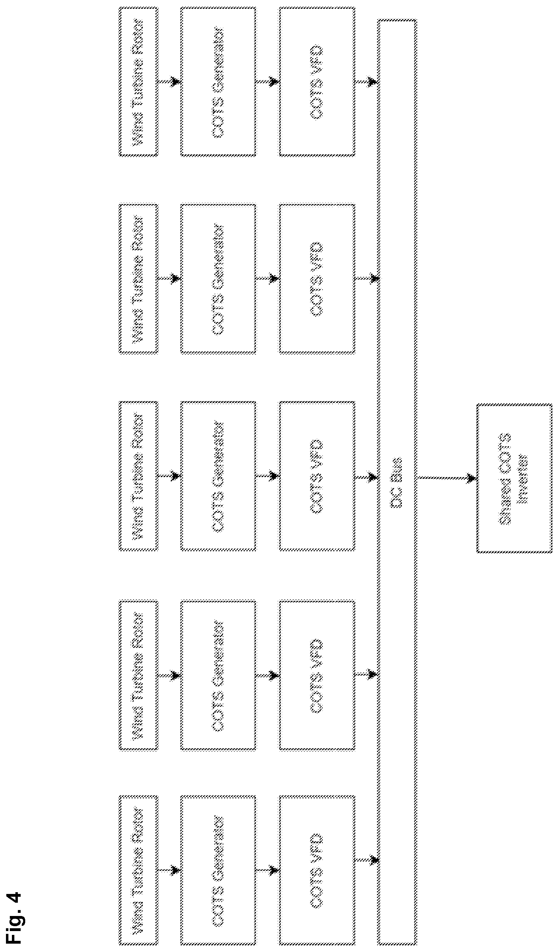

The powertrain 131 of the wind turbine 130 can often be as much as 50% of the overall cost. The architecture shown in Figure 4 allows the use of almost entirely COTS components which have other uses that have allowed their costs to be brought down by scale. This includes a gearbox, an industrial motor (run in reverse as a generator), a variable frequency drive (VFD) (run in reverse and re-purposed as an active rectifier), and an inverter. Multiple VFDs may be connected to a single inverter. The inverter may be an inverter designed for solar applications.

Particular to this architecture is the repurposing of the VFD to run as an active rectifier. Typically, VFDs are made to take AC power from the wall and convert it to a signal used to control a motor. To accomplish this, they consist of a passive rectifier which converts AC to DC, and an active inverter to control the AC output to the motor. The wind direction system runs this in reverse: the active inverter becomes an active rectifier, which allows us to take the AC output of the generator and control it to a reliable DC voltage that can be fed into an inverter. This is then combined in a DC bus and fed into a single inverter. The inverter shown is a 25 kW inverter, though other inverter wattages are contemplated. These inverters are already known for use with solar panels, and using a single inverter takes advantage of the lower $/kW cost of larger systems.

To further reduce the cost of control, control algorithms allow users to accurately control the speed of the wind turbine 130 to its optimum operating point without requiring expensive power electronics.

In the foregoing description, certain terms have been used for brevity, clearness, and understanding. No unnecessary limitations are to be inferred therefrom beyond the requirement of the prior art because such terms are used for descriptive purposes and are intended to be broadly construed. The different configurations, systems, and method steps described herein may be used alone or in combination with other configurations, systems and method steps. It is to be expected that various alternatives and modifications are possible within the scope of the appended claims.

## Claims

1. A wind direction system, the wind direction system comprising:
at least one lower airfoil having a leading edge, front surface, middle surface, rear
surface, and trailing edge,
wherein the at least one lower airfoil is mounted to a building surface,
wherein the leading edge and the front surface extend over a building edge formed between a front building surface and an upper building surface,
wherein the front surface of the at least one lower airfoil is angled into an airflow relative to the middle surface,
wherein the airflow travels along the building surface towards the building edge; and
at least one wind turbine mounted above the at least one lower airfoil.

2. The system of claim 1, wherein a closed gap extends between the leading edge and the front surface of the building.

3. The system of claim 1, wherein the leading edge is located in contact with the front surface of the building.

4. The system of claim 1, wherein the rear surface of the at least one lower airfoil extends at a downward angle relative to the middle surface.

5. The system of claim 1, wherein the at least one lower airfoil comprises a plurality of lower airfoils.

6. The system of claim 5, wherein at least one of the leading edge, front surface, middle surface, rear surface, and trailing edge is located on one of the plurality of lower airfoils, and another of the leading edge, front surface, middle surface, rear surface, and trailing edge is located on another of the plurality of lower airfoils.

7. The system of claim 1, wherein the at least one wind turbine is at least one vertical axis (VA) wind turbine, wherein the axis of rotation of the at least one VA wind turbine extends perpendicular to the upper building surface.

8. The system of claim 1, wherein the at least one wind turbine is at least one horizontal axis wind turbine, wherein the axis of rotation of the at least one horizontal axis wind turbine extends parallel to the upper building surface and parallel to the direction of airflow.

9. The wind direction system of claim 1, the wind direction system further comprising:
at least one upper airfoil mounted above the at least one lower airfoil,
wherein the at least one wind turbine is mounted between the at least one lower airfoil and the at least one upper airfoil.

10. The system of claim 9, wherein the at least one upper airfoil comprises a plurality of upper airfoils.

11. The system of claim 10, wherein at least one of a fore surface, a central surface, and a back surface is located on one of the plurality of upper airfoils, and another of the fore surface, central surface, and back surface is located on another of the plurality of upper airfoils.

12. The system of claim 9, wherein a back surface of the at least one upper airfoil extends at an upward angle relative to a central surface of the at least one upper airfoil.

13. The wind direction system of claim 1, wherein the rear surface of the at least one lower airfoil extends at a downward angle relative to the middle surface, and the wind direction system further comprises at least one powertrain assembly operably connected to the at least one wind turbine.

14. The system of claim 13, wherein the powertrain comprises at least one industrial motor operably connected to the at least one wind turbine, at least one variable frequency drive (VFD) operably connected to the at least one industrial motor, and a single inverter operably connected to the at least one VFD.

15. The system of claim 13, further comprising at least one upper airfoil mounted above the at least one lower airfoil.

## Patentansprüche

1. Ein Windrichtungssystem, wobei das Windrichtungssystem Folgendes umfasst:
mindestens eine untere Tragfläche mit einer Vorderkante, einer vorderen Fläche,
einer mittleren Fläche, einer hinteren Fläche und einer Hinterkante,
wobei die mindestens eine untere Tragfläche an einer Gebäudefläche angebracht ist,
wobei sich die Vorderkante und die vordere Fläche über eine Gebäudekante erstrecken, die zwischen einer vorderen Gebäudefläche und einer oberen Gebäudefläche gebildet wird,
wobei die vordere Fläche der mindestens einen unteren Tragfläche relativ zur mittleren Fläche in einen Luftstrom abgewinkelt ist,
wobei sich der Luftstrom entlang der Gebäudeoberfläche in Richtung der Gebäudekante bewegt, und
mindestens eine Windturbine, die oberhalb der mindestens einen unteren Tragfläche angebracht ist.

2. Das System nach Anspruch 1, wobei sich ein geschlossener Spalt zwischen der Vorderkante und der vorderen Fläche des Gebäudes erstreckt.

3. Das System nach Anspruch 1, wobei die Vorderkante in Kontakt mit der vorderen Fläche des Gebäudes steht.

4. Das System nach Anspruch 1, wobei sich die hintere Fläche der mindestens einen unteren Tragfläche in einem nach unten gerichteten Winkel relativ zur mittleren Fläche erstreckt.

5. Das System nach Anspruch 1, wobei die mindestens eine untere Tragfläche mehrere untere Tragflächen umfasst.

6. Das System nach Anspruch 5, wobei mindestens eine der Vorderkante, der vorderen Fläche, der mittleren Fläche, der hinteren Fläche und der Hinterkante auf einer der mehreren unteren Tragflächen angeordnet ist und eine andere der Vorderkante, der vorderen Fläche, der mittleren Fläche, der hinteren Fläche und der Hinterkante auf einer anderen der mehreren unteren Tragflächen angeordnet ist.

7. Das System nach Anspruch 1, wobei die mindestens eine Windturbine mindestens eine Windturbine mit vertikaler Achse (VA) ist, wobei die Rotationsachse der mindestens einen VA-Windturbine senkrecht zur oberen Gebäudefläche verläuft.

8. Das System nach Anspruch 1, wobei es sich bei der mindestens einen Windturbine um mindestens eine Windturbine mit horizontaler Achse handelt, wobei die Rotationsachse der mindestens einen Windturbine mit horizontaler Achse parallel zur oberen Gebäudefläche und parallel zur Richtung des Luftstroms verläuft.

9. Das Windrichtungssystem nach Anspruch 1, wobei das Windrichtungssystem ferner Folgendes umfasst:
mindestens eine obere Tragfläche, die über der mindestens einen unteren Tragfläche angebracht ist;
wobei die mindestens eine Windturbine zwischen der mindestens einen unteren Tragfläche und der mindestens einen oberen Tragfläche angebracht ist.

10. Das System nach Anspruch 9, wobei die mindestens eine obere Tragfläche mehrere obere Tragflächen umfasst.

11. Das System nach Anspruch 10, wobei mindestens eine der vorderen Fläche, der mittleren Fläche und der hinteren Fläche auf einer der mehreren oberen Tragflächen angeordnet ist und eine andere der vorderen Fläche, der mittleren Fläche und der hinteren Fläche auf einer anderen der mehreren oberen Tragflächen angeordnet ist.

12. Das System nach Anspruch 9, wobei sich eine hintere Fläche der mindestens einen oberen Tragfläche in einem nach oben gerichteten Winkel relativ zu einer mittleren Fläche der mindestens einen oberen Tragfläche erstreckt.

13. Das Windrichtungssystem nach Anspruch 1, wobei sich die hintere Fläche der mindestens einen unteren Tragfläche in einem nach unten gerichteten Winkel relativ zur mittleren Fläche erstreckt und das Windrichtungssystem ferner mindestens eine Antriebsstranganordnung umfasst, die betriebsmäßig mit der mindestens einen Windturbine verbunden ist.

14. Das System nach Anspruch 13, wobei der Antriebsstrang mindestens einen Industriemotor, der betriebsmäßig mit der mindestens einen Windturbine verbunden ist, mindestens einen Antrieb mit variabler Frequenz (VFD), der betriebsmäßig mit dem mindestens einen Industriemotor verbunden ist, und einen einzelnen Wechselrichter, der betriebsmäßig mit dem mindestens einen VFD verbunden ist, umfasst.

15. Das System nach Anspruch 13, das ferner mindestens eine obere Tragfläche umfasst, die über der mindestens einen unteren Tragfläche angebracht ist.

## Revendications

1. Un système de direction du vent, le système de direction du vent comprenant :
au moins un profil aérodynamique inférieur présentant un bord d'attaque, une surface
avant, une surface centrale, une surface arrière et un bord de fuite,
dans lequel au moins un profil aérodynamique inférieur est monté sur une surface du bâtiment,
dans lequel le bord d'attaque et la surface avant s'étendent sur un bord du bâtiment formé entre une surface avant du bâtiment et une surface supérieure du bâtiment,
dans lequel la surface avant d'au moins un profil aérodynamique inférieur est inclinée dans un flux d'air par rapport à la surface centrale,
dans lequel le flux d'air se déplace le long de la surface du bâtiment vers le bord du bâtiment ; et
au moins une éolienne montée au-dessus d'au moins un profil aérodynamique inférieur.

2. Le système de la revendication 1, dans lequel un espace fermé s'étend entre le bord d'attaque et la surface avant du bâtiment.

3. Le système de la revendication 1, dans lequel le bord d'attaque est placé en contact avec la surface avant du bâtiment.

4. Le système de la revendication 1, dans lequel la surface arrière d'au moins un profil aérodynamique inférieur s'étend selon un angle descendant par rapport à la surface centrale.

5. Le système de la revendication 1, dans lequel au moins un profil aérodynamique inférieur comprend plusieurs profils aérodynamiques inférieurs.

6. Le système de la revendication 5, dans lequel au moins un élément parmi le bord d'attaque, la surface avant, la surface centrale, la surface arrière et le bord de fuite se trouve sur l'un des différents profils aérodynamiques inférieurs et un autre élément parmi le bord d'attaque, la surface avant, la surface centrale, la surface arrière et le bord de fuite se trouve sur un autre des différents profils aérodynamiques inférieurs.

7. Le système de la revendication 1, dans lequel au moins une éolienne est une éolienne à axe vertical (VA) et dans lequel l'axe de rotation d'au moins une éolienne à axe vertical s'étend perpendiculairement à la surface supérieure du bâtiment.

8. Le système de la revendication 1, dans lequel au moins une éolienne est une éolienne à axe horizontal et dans lequel l'axe de rotation d'au moins une éolienne à axe horizontal s'étend parallèlement à la surface supérieure du bâtiment et parallèlement à la direction du flux d'air.

9. Le système de direction du vent de la revendication 1, le système de direction du vent comprenant en outre :
au moins un profil aérodynamique supérieur monté au-dessus d'au moins un profil aérodynamique inférieur ;
dans lequel au moins une éolienne est montée entre au moins un profil aérodynamique inférieur et au moins un profil aérodynamique supérieur.

10. Le système de la revendication 9, dans lequel au moins un profil aérodynamique supérieur comprend plusieurs profils aérodynamiques supérieurs.

11. Le système de la revendication 10, dans lequel au moins un élément parmi la surface avant, la surface centrale et la surface arrière se trouve sur l'un des différents profils aérodynamiques supérieurs et un autre élément parmi la surface avant, la surface centrale et la surface arrière se trouve sur un autre des différents profils aérodynamiques supérieurs.

12. Le système de la revendication 9, dans lequel la surface arrière d'au moins un profil aérodynamique supérieur s'étend selon un angle ascendant par rapport à la surface centrale d'au moins un profil aérodynamique supérieur.

13. Le système de direction du vent de la revendication 1, dans lequel la surface arrière d'au moins un profil aérodynamique inférieur s'étend selon un angle descendant par rapport à la surface centrale, le système de direction du vent comprenant en outre au moins un ensemble de groupe motopropulseur relié de manière opérationnelle à au moins une éolienne.

14. Le système de la revendication 13, dans lequel le groupe motopropulseur comprend au moins un moteur industriel relié de manière opérationnelle à au moins une éolienne, au moins un variateur de fréquence (VFD) relié de manière opérationnelle à au moins un moteur industriel et un onduleur unique relié de manière opérationnelle à au moins un variateur de fréquence.

15. Le système de la revendication 13, comprenant en outre au moins un profil aérodynamique supérieur monté au-dessus d'au moins un profil aérodynamique inférieur.
